# EUROPÄISCHE PATENTSCHRIFT

(11) **EP 3 002 866 B1**
(45) Veröffentlichungstag und Bekanntmachung des Hinweises auf die Patenterteilung: **08.09.2021**
(21) Anmeldenummer: 14187014.7
(22) Anmeldetag: 30.09.2014
(51) Int. Cl.: H02M 7/487, H02M 1/00

(54) **Spannungszwischenkreis-Stromrichter in Fünfpunkttopologie**
Intermediate power circuit converter in five point topology
Convertisseur de circuit de tension intermédiaire dans une topologie à cinq points

(43) Veröffentlichungstag der Anmeldung: 06.04.2016
(73) Patentinhaber: Siemens Aktiengesellschaft, 80333 München (DE)
(72) Erfinder: Eckel, Hans-Günter, 18059 Rostock (DE); Gierschner, Sidney, 18147 Rostock (DE)

(56) Entgegenhaltungen:
- WO-A1-2015/174024
- JP-A- 2014 064 431
- US-A1- 2012 218 795
- US-A1- 2013 314 957
- US-A1- 2014 063 885
- Zhao Zhenbo: "Application tips to parallel IGBT", , 8 July 2008 (2008-07-08), pages 1-36, XP055515583, Retrieved from the Internet: URL:https://www.google.com/url?sa=t&rct=j& q=&esrc=s&source=web&cd=1&ved=2ahUKEwjCpqL jzoreAhXM-aQKHbWVDg8QFjAAegQICRAC&url=http %3A%2F%2Fdabo-corp.com%2F%3Fmodule%3Dfile% 26act%3DprocFileDownload%26file_srl%3D576% 26sid%3Debb5fe56de05551cb1544cc1279fd4dd&u sg=AOvVaw0AqZ2okxo7vg9bKTdy88yO [retrieved on 2018-10-16]
- .: "DATA SHEET ÖLFLEX SERVO 2YSLCY-JB", , 7 February 2008 (2008-02-07), pages 1-2, XP055751927, Retrieved from the Internet: URL:http://files.engineering.com/download. aspx?folder=102bdc56-bea0-412a-86d9-2f5339 8baf29&file=DB0036425EN_5_1.pdf [retrieved on 2020-11-18]

## Beschreibung

Die Erfindung betrifft einen Spannungszwischenkreis-Stromrichter.

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet.

Stromrichter werden eingesetzt, um elektrische Maschinen und Motoren gezielt mit elektrischer Energie zu versorgen. Dadurch sind diese elektrischen Maschinen und Motoren durch die Stromrichter steuerbar und regelbar. Ein weiteres Anwendungsgebiet ist die Steuerung von Energieflüssen, die Kompensation von Oberschwingungen und das Bereitstellen von Blindleistung in Energieversorgungsnetzen. Darüber hinaus sind Stromrichter an der verlustarmen Übertragung von Energie mittels Hochspannungsgleichstromübertragung (HGÜ) beteiligt.

Um die Harmonischen in Spannung und Strom auf der AC-Seite des Stromrichters zu reduzieren, kommen Stromrichter mit einer höheren Stufenzahl zum Einsatz. Im Vergleich zu Zweipunktstromrichtern haben diese Stromrichter einen geringeren Oberschwingungsgehalt der Ausgangsspannung und erlauben bei gleicher Sperrspannung der Leistungshalbleiter eine höhere Zwischenkreisspannung und damit eine höhere wechselspannungsseitige Ausgangsspannung. Daher haben bereits Dreipunktstromrichter in verschiedenen Ausführungsformen ein breites Anwendungsfeld gefunden. Eine noch bessere Qualität der Ausgangsspannung lässt sich mit Fünfpunktstromrichtern erreichen.

Ein Fünfpunktstromrichter ist bereits aus der DE 10 2012 214 663 A bekannt. Die dort offenbarten Topologien besitzen sehr komplexe Kommutierungskreise. Die einzelnen Potenziale, zumindest ein großer Teil der einzelnen Potenziale, müssen niederinduktiv mit den Leistungshalbleitern verbunden sein. Dadurch ergeben sich Restriktionen beispielsweise durch die Verwendung niederinduktiver Verschienung oder der räumlichen Nähe der einzelnen Komponenten zueinander.

Aus der JP 2014 064431 A ist eine mehrstufige Stromrichterschaltung bekannt. Die Vorrichtung besitzt eine Grundschaltung mit einem Paar von Schaltelementen und einen potentialfreien Kondensator, der in einer Reihenschaltung an eine erste Zelle angeschlossen ist. Ein erweiterter Schaltkreis verbindet eine zweite Zelle parallel in Bezug zum potentialfreien Kondensator in der ersten Zelle. Ein M-phasiger Spannungsauswahlkreis schaltet in einer EIN/AUS Steuerung von Schaltelementen zwischen Eingangs- und Ausgangsanschlüssen und gibt dabei ein elektrisches Potential eines beliebigen Anschlusses der Eingangsanschlüsse an die Ausgangsklemme.

Aus der US 2014/063885 A1 ist ein Leistungsstromrichter bekannt. In einem solchen Leistungsstromrichter erhalten Steuerschaltungen Spannungskorrekturwerte, um Stromfehler aufgrund von Abweichungen zwischen Zielwert und Messwert zu reduzieren. Multiplexer liefern Modulationsschaltungen mit Spannungszielwerten, korrigiert von Spannungskorrekturwerte, die zu den Spannungserfassungswerten addiert werden. Die Modulationsschaltungen liefern Ansteuersignale für die Schaltelemente in den Multilevel-Schaltungen. Zusätzlich stellt eine Vorzeichenschaltung Ansteuersignale für die Schaltelemente in einer Brückenklemmschaltung bereit.

Aus der US 2013/314957 A1 ist ein Hochspannungsstromrichter mit einer Multilevelstruktur bekannt. Dieser Stromrichter umfasst eine Vielzahl von gesteuerten Umrichterzellen, die aufeinandergestapelt sind. Mindestens eine Klemmdiode ist mit einem oder mehreren Umrichterzellen verbunden, um einen Neutralpunkt geklemmte (NPPC) Wandlerstruktur bereitzustellen. Potentialfreie Kondensatoren sind mit der NPPC Wandlerstruktur verbunden und ergeben einen Wandler mit einer Sternpunkt geklemmten potentialfreien Kondensatorstruktur.

Aus der WO 2015/174024 A1 ist eine Leistungsumwandlungsvorrichtung bekannt, bei der Kondensatoren, die für den stationären Betrieb benötigt werden, sogar im Leerlaufzustand aufgeladen werden können. Diese Anordnung stellt auch einen Leistungskonditionierer dar, der die Leistungsumwandlungsvorrichtung verwendet. Eine erste Umwandlungsschaltung schaltet dabei die Spannung, die zwischen einem ersten Ausgangspunkt und einem Bezugspotentialpunkt erzeugt wird, zwischen drei Pegeln um. Eine zweite Umwandlungsschaltung schaltet eine weitere Spannung zwischen dem Bezugspotentialpunkt und einem zweiten Ausgabepunkt zwischen drei Pegeln um. Eine dritte Umwandlungsschaltung, die vier Schalter in einer Vollbrücke umfasst, wandelt die zwischen dem ersten Ausgangspunkt und dem zweiten Ausgangspunkt erzeugte Spannung in eine Wechselspannung um und gibt diese Wechselspannung aus.

Der Erfindung liegt die Aufgabe zugrunde, einen Spannungszwischenkreis-Stromrichter anzugeben, bei dem einzelne Verbindungen nicht mehr niederinduktiv ausgeführt sein müssen.

Die Aufgabe wird durch einen Spannungszwischenkreis-Stromrichter mit zwei gleichspannungsseitig in Reihe angeordneten Teilstromrichtern gelöst, wobei der Teilstromrichter eine Parallelschaltung eines Kondensators mit einer Reihenschaltung aus zwei Brückenmodulen aufweist, wobei die Verbindung zwischen den zwei in Reihenschaltung angeordneten Brückenmodulen einen Ausgang des Teilstromrichters darstellt, wobei die Ausgänge der beiden Teilstromrichter mittels eines weiteren Brückenmoduls miteinander verbunden sind, wobei die Brückenmodule jeweils eine Reihenschaltung von zwei Leistungshalbleitereinheiten aufweisen, wobei die Verbindung zwischen den beiden Leistungshalbleitereinheiten die Zwischenpotenziale der Brückenmodule darstellen, wobei die Zwischenpotenziale des Teilstromrichters über einen weiteren Kondensator elektrisch miteinander verbunden sind, wobei das Zwischenpotenzial des weiteren Brückenmoduls einen Phasenanschluss des Spannungszwischenkreis-Stromrichters darstellt.

Der Erfindung liegt die Erkenntnis zugrunde, dass sich die Kommutierungskreise der einzelnen Leistungshalbleiter durch die erfindungsgemäße Anordnung vereinfachen lassen. Dadurch sind in einigen Verbindungen keine niederinduktiven Verbindungen mehr notwendig. Anstelle von Verschienungen kann dann auch auf andere elektrische Verbindungen wie beispielsweise Kabel zurückgegriffen werden, die deutlich kostengünstiger sind. Beim erfindungsgemäßen Spannungszwischenkreis-Stromrichter sind insbesondere die Verbindungen zwischen den beiden Teilstromrichtern nicht mehr niederinduktiv auszuführen. Das gleiche gilt für die Verbindung zwischen Teilstromrichter und weiterem Brückenmodul. Dies ermöglicht es, den Spannungszwischenkreis-Stromrichter modular aufzubauen, wobei innerhalb dieser Module eine niederinduktive Verbindung vorgesehen wird und die Module untereinander mit Verbindungen höherer Induktivität miteinander verbunden werden. Insbesondere eignen sich damit auch Kabel für die Verbindungen zwischen den einzelnen Modulen.

Mit dem erfindungsgemäßen Spannungszwischenkreis-Stromrichter kann Energie von der Gleichspannungsseite zum Phasenanschluss und umgekehrt übertragen werden. Der Phasenanschluss, auch als Lastanschluss bezeichnet, ist damit der Anschlusspunkt einer elektrischen Last oder einer Phase eines Energieversorgungsnetzes. Der Spannungszwischenkreis-Stromrichtcr kann dabei einphasig oder mehrphasig, insbesondere dreiphasig zur Verbindung mit einem Drehstromnetz oder einem Drehstromverbraucher, ausgebildet sein. Für eine mehrphasige Anordnung ist die erfindungsgemäße Anordnung für jede Phase auszuführen und gleichspannungsseitig in einer Parallelschaltung zu verbinden. Dabei kann auf zusätzliche Kondensatoren der Teilstromrichter, die zu der Reihenschaltung von Brückenmodulen parallel angeordnet sind, verzichtet werden. Darüber hinaus können die bestehenden Kondensatoren, die zu der Reihenschaltung von Brückenmodulen parallel angeordnet sind, oftmals mit geringerer Kapazität ausgeführt werden im Vergleich zum einphasigen Stromrichter, da durch die kontinuierliche Leistungsabgabe die Spannungswelligkeit des Zwischenkreises abnimmt.

Bei einer vorteilhaften Ausgestaltungsform weist die Verbindung zwischen dem Teilstromrichter und dem weiteren Brückenmodul eine höhere Induktivität auf als die Verbindungen zwischen dem Kondensator oder dem weiteren Kondensator und der Leistungshalbleitereinheit. Die Möglichkeit, dass der Stromrichter aufgrund seines Aufbaus an einigen Stellen für Kommutierungsvorgänge keine niederinduktive Verbindung mehr erfordert kann dazu genutzt werden, auf die niederinduktive Realisierung, beispielsweise durch eine niederinduktive Verschienung zu verzichten. Es können für diese Verbindungen deutlich kostengünstigere Alternativen, wie beispielsweise Kabelverbindungen, genutzt werden.

Bei einer weiteren vorteilhaften Ausgestaltungsform weist die elektrische Verbindung zwischen den Teilstromrichtern eine höhere Induktivität auf als die Verbindungen zwischen Kondensator oder weiterem Kondensator und Leistungshalbleitereinheit. Die Möglichkeit, dass der Stromrichter aufgrund seines Aufbaus an einigen Stellen für Kommutierungsvorgänge keine niederinduktive Verbindung mehr erfordert kann dazu genutzt werden, auf die niederinduktive Realisierung, beispielsweise durch eine niederinduktive Verschienung zu verzichten. Es können für diese Verbindungen deutlich kostengünstigere Alternativen, wie beispielsweise Kabelverbindungen, genutzt werden.

Bei einer weiteren vorteilhaften Ausgestaltungsform sind die Teilstromrichter räumlich voneinander getrennt angeordnet.

Der mögliche Verzicht auf eine niederinduktive Verbindung bietet neben einer kostengünstigen Verbindung auch die Möglichkeit, die einzelnen Module wie Teilstromrichter oder Brückenmodul räumlich voneinander zu trennen. Insbesondere bei Anwendungen, bei denen der Einbauraum stark begrenzt ist, wie beispielsweise bei einem Fahrzeug, können die einzelnen Stromrichterkomponenten räumlich getrennt voneinander angeordnet werden. Die dazwischenliegende Entfernung kann mittels Kabel einfach und kostengünstig überbrückt werden.

Bei einer weiteren vorteilhaften Ausgestaltungsform sind die Teilstromrichter in unterschiedlichen Schaltschränken angeordnet. Durch die nicht mehr notwendigerweise niederinduktive Verbindung zwischen den Teilstromrichter und zwischen dem Teilstromrichter und dem Brückenmodul können diese Komponenten modular in Stromrichterschränke untergebracht werden. Dadurch können deutlich kleinere Schränke verwendet werden, die deutlich geringere Anforderungen an den Einbauraum bzw. Aufstellfläche haben. Damit reduzieren sich die Anforderungen an Einbauraum/Aufstellfläche. Auch der Transport von kleineren Schränken mit dann geringerem Gewicht hat sich als vorteilhaft erwiesen.

Bei einer weiteren vorteilhaften Ausgestaltungsform weist die Leistungshalbleitereinheit einen abschaltbaren Leistungshalbleiterschalter mit einer dazu antiparallel angeordneten Diode aufweist. Diese Ausgestaltungsform baut auf Standardkomponenten auf. Diese sind einfach und kostengünstig zu beschaffen und stellen einen zuverlässigen Betrieb des Spannungszwischenkreis-Stromrichters sicher.

Bei einer weiteren vorteilhaften Ausgestaltungsform weist die Leistungshalbleitereinheit eine Reihenschaltung mehrerer Leistungshalbleiter auf. Damit lässt sich eine höhere Sperrspannung der Leistungshalbleitereinheit erreichen. Besonders vorteilhaft ist dies bei den Leistungshalbleitereinheiten des weiteren Brückenmoduls. Prinzipbedingt liegt je nach Arbeitspunkt an den Leistungshalbleitereinheiten des weiteren Brückenmoduls eine höhere Spannung an als bei den Leistungshalbleitereinheiten der Teilstromrichter. Somit kann durch eine Reihenschaltung von Leistungshalbleitern und einer damit verbundenen höheren resultierenden Sperrspannung eine optimale Ausnutzung der Leistungshalbleiter des Spannungszwischenkreis-Stromrichters erreicht werden. Somit garantiert die Reihenschaltung mehrerer Leistungshalbleiter, insbesondere im weiteren Brückenmodul, eine optimale Ausnutzung der Leistungshalbleiter.

Bei dieser Ausgestaltungsform kann der Spannungsbereich, in dem der Spannungszwischenkreis-Stromrichter einsetzbar ist, weiter vergrößert werden. Durch den modularen Aufbau können die einzelnen Module größer und schwerer werden, wobei die einzelnen modularen Einheiten immer noch einfach handhabbar sind, insbesondere in Bezug auf Größe und Gewicht, als herkömmliche Fünfpunktstromrichter, die komplett in einem Schaltschrank angeordnet sind. Aus diesen einzelnen Modulen, wie Teilstromrichter und weiteres Brückenmodul, lassen sich dann einfach und kostengünstig große und leistungsfähige Stromrichter zusammenstellen.

Bei einer weiteren vorteilhaften Ausgestaltungsform weist die Leistungshalbleitereinheit abschaltbare Leistungshalbleiter vom Typ IGBT und/oder IGCT auf. Diese leistungselektronischen Standardbauelemente sind kostengünstig verfügbar und für den zuverlässigen Einsatz im Spannungszwischenkreis-Stromrichter geeignet. Ihr Schaltverhalten ermöglicht den Verzicht auf niederinduktive Verbindungen in Teilen des Spannungszwischenkreis-Stromrichters.

Bei einer weiteren vorteilhaften Ausgestaltungsform weist die Leistungshalbleitereinheit einen rückwärts leitfähigen, abschaltbaren Leistungshalbleiter auf. Mit dieser Art von Leistungshalbleitern lässt sich das eingesetzte Halbleitermaterial besonders gut ausnutzen. Dies führt zu einem kostengünstigen Spannungszwischenkreis-Stromrichter.

Bei einer weiteren vorteilhaften Ausgestaltungsform ist der Teilstromrichter und/oder das weitere Brückenmodule als tauschbare Einheit ausgebildet. In diesem Fall wird durch konstruktive Maßnahmen dafür gesorgt, dass die Komponenten einfach tauschbar sind. Dazu werden diese beispielsweise in einem Stromrichterschrank derart montiert, dass sie einfach und durch wenige Handgriffe aus dem Schaltschrank entfernbar sind. Darüber hinaus wird bei den Komponenten darauf geachtet, dass das Gewicht der einzelnen tauschbaren Einheiten nur so groß ist, dass diese ohne Hilfsmittel von einer oder zwei Personen gehoben oder gehalten werden können. In der Praxis haben sich dafür Gewichte im Bereich von 15kg bis 50kg, insbesondere ein Gewicht von in etwa 30kg als günstig erwiesen. Durch die einzelnen Module wie Teilstromrichter oder Brückenmodul werden diese Gewichte für einen Stromrichter der entsprechenden Leistungsklasse erst möglich.

Im Folgenden wird die Erfindung anhand der in den Figuren dargestellten Ausführungsbeispiele näher beschrieben und erläutert. Es zeigen:
- FIG 1: einen Spannungszwischenkreis-Stromrichter und
- FIG 2: ein Brückenmodul.

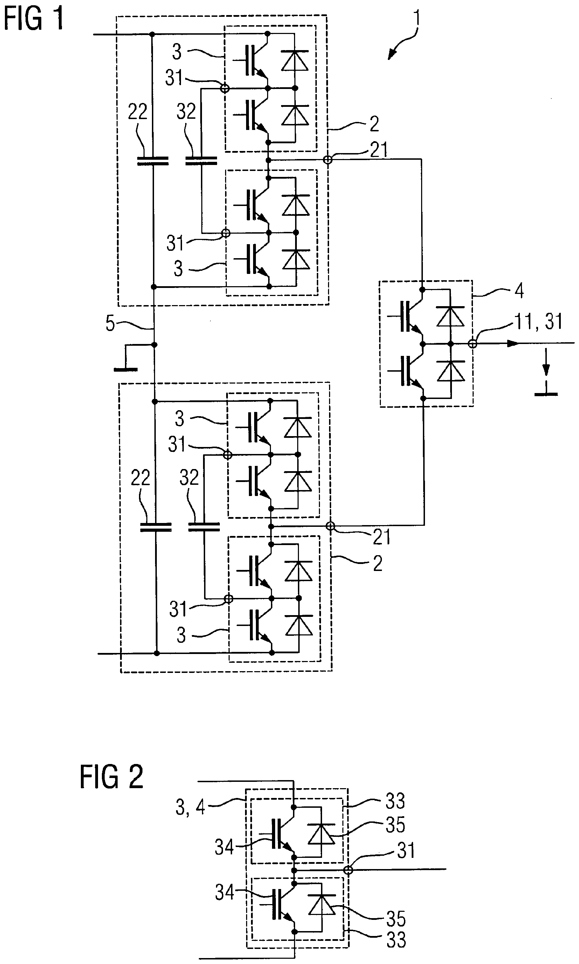

FIG 1 zeigt ein Ausführungsbeispiel eines Spannungszwischenkreis-Stromrichters 1 mit zwei Teilstromrichtern 2. Diese beiden Teilstromrichter 2 sind gleichspannungsseitig in Reihe geschaltet. Diese Reihenschaltung stellt den Zwischenkreis des Spannungszwischenkreis-Stromrichters 1 das. Jeder Teilstromrichter 2 weist einen Kondensator 22 und, elektrisch parallel dazu, eine Reihenschaltung zweier Brückenmodule 3 auf. Der Verbindungspunkt dieser Reihenschaltung ist der Ausgang 21 des Teilstromrichters 2. Die Ausgänge 21 der beiden Teilstromrichter 2 sind mit einem weiteren Brückenmodul 4 elektrisch verbunden. Die einzelnen Brückenmodule 3, 4, d.h. die Brückenmodule 3, die im Teilstromrichter 2 angeordnet sind, sowie das weitere Brückenmodul 4, weisen ein Zwischenpotenzial 31 auf. Die schaltungstechnische Realisierung des Zwischenpotenzials 31 ist der FIG2 und der zugehörigen Beschreibung zu entnehmen. Die beiden Zwischenpotenziale 31 des Teilstromrichters 2 werden über einen weiteren Kondensator 32 miteinander verbunden. Das Zwischenpotenzial 31 des weiteren Brückenmoduls 4 stellt gleichzeitig den Phasenanschluss 11 des Spannungszwischenkreis-Stromrichters 1 dar.

Bei dem hier dargestellten Spannungszwischenkreis-Stromrichter 1 handelt es sich um eine einphasige Ausführung. Daher weist dieser Stromrichter nur einen Phasenanschluss 11 auf. Durch das Hinzufügen weiterer Phasen, die am Zwischenkreis des Spannungszwischenkreis-Stromrichters 1 parallelgeschaltet werden, kann ein mehrphasiger Spannungszwischenkreis-Stromrichter 1 realisiert werden. Für Drehstromanwendungen haben sich insbesondere 3-phasige Ausführungen als vorteilhaft erwiesen. Bei einer mehrphasigen Ausführung ist es möglich, auf das Hinzufügen von Kondensatoren 22 des Teilstromrichters 2 die parallel zu der Reihenschaltung der beiden Brückenmodule 3 angeordnet sind, zu verzichten. Insbesondere für den 3-phasigen Fall können die Kondensatoren 22 des Teilstromrichters 2, die parallel zu der Reihenschaltung der beiden Brückenmodule 3 angeordnet sind, mit geringerer Kapazität ausgeführt werden, da die gleichmäßige Augenblicksleistung an den Phasenanschlüssen 11 zu einer geringeren Welligkeit der Zwischenkreisspannung führt.

Bei der einphasigen Ausführung hat es sich als günstig erwiesen, das Potenzial des Zwischenkreises eindeutig mittels Erdung festzulegen. Dazu ist in dem Ausführungsbeispiel nach FIG 2 in der Verbindung 5 zwischen den beiden Teilstromrichtern 2 eine Erdung vorgesehen. Die Erdung kann alternativ an einer beliebigen anderen Stelle Spannungszwischenkreis-Stromrichters 1, insbesondere an einem seiner Teilstromrichter 2, vorgesehen werden. Je nach Anwendungsfall, insbesondere bei mehrphasigen oder 3-phasigen Ausgestaltungen der Erfindung kann auf die Erdung des Zwischenkreises verzichtet werden.

In diesem Ausführungsbeispiel müssen aufgrund der Kommutierungsvorgängen bei den Leistungshalbleitern, die Verbindung 5 zwischen den beiden Teilstromrichtern 2 sowie die Verbindungen zwischen Teilstromrichter 2 und weiterem Brückenmodul 4 nicht niederinduktiv ausgeführt werden.

FIG 2 zeigt ein Ausführungsbeispiel eines Brückenmoduls 3, 4. Dieses weist eine Reihenschaltung zweier Leistungshalbleitereinheiten 33 auf. Der Verbindungspunkt der beiden Leistungshalbleitereinheiten 33 stellt das Zwischenpotenzial 31 dar. In diesem Ausführungsbeispiel umfasst die Leistungshalbleitereinheit 33 eine Parallelschaltung eines abschaltbaren Leistungshalbleiters 34, vorzugsweise ein IGBT- oder IGCT-Bauelement, und einer dazu antiparallel angeordneten Diode 35. Es hat sich ebenfalls als günstig erwiesen, diese Parallelschaltung durch eine rückwärtsleitfähigen, abschaltbaren Leistungshalbleiter zu ersetzen. Darüber hinaus hat es sich als günstig erwiesen, für die Leistungshalbleitereinheit 33 eine Reihenschaltung mehrerer Leistungshalbleiter vorzusehen. Durch die damit entstehende höhere Spannungsfestigkeit kann der Spannungszwischenkreis-Stromrichter 1 für den Betrieb an höheren Spannungen ausgelegt werden. Insbesondere für das weitere Brückenmodul 4 hat sich die Reihenschaltung von Leistungshalbleiter in der Leistungshalbleitereinheit 33 als günstig erwiesen, um die Leistungshalbleiter des Spannungszwischenkreis-Stromrichters 1 optimal auszunutzen. Dies ist darin begründet, dass an den Leistungshalbleitereinheiten 33 des weiteren Brückenmoduls 4 im abgeschalteten Zustand eine höhere Spannung anliegt als an den Leistungshalbleitereinheiten 33 der Teilstromrichter 2.

Der Phasenanschluss 11 des Spannungszwischenkreis-Stromrichters 1 entspricht dem Zwischenpotenzial 31 des weiteren Brückenmoduls 4.

Obwohl die Erfindung im Detail durch die bevorzugten Ausführungsbeispiele näher illustriert und beschrieben wurde, ist die Erfindung nicht alleine auf die offenbarten Beispiele beschränkt und andere Variationen können vom Fachmann hieraus abgeleitet werden, ohne den Schutzumfang der Erfindung zu verlassen.

## Patentansprüche

1. Spannungszwischenkreis-Stromrichter (1) mit zwei gleichspannungsseitig in Reihe angeordneten Teilstromrichtern (2), wobei der Teilstromrichter (2) eine Parallelschaltung eines Kondensators (22) mit einer Reihenschaltung aus zwei Brückenmodulen (3) aufweist, wobei die Verbindung zwischen den zwei in Reihenschaltung angeordneten Brückenmodulen (3) einen Ausgang (21) des Teilstromrichters (2) darstellt,
wobei die Ausgänge (21) der beiden Teilstromrichter (2) mittels eines weiteren Brückenmoduls (4) miteinander verbunden sind, wobei die Brückenmodule (3,4) jeweils eine Reihenschaltung von zwei Leistungshalbleitereinheiten (33) aufweisen, wobei die Verbindung zwischen den beiden Leistungshalbleitereinheiten (33) die Zwischenpotenziale (31) der Brückenmodule (3,4) darstellen, wobei die Zwischenpotenziale (31) des Teilstromrichters (2) über einen weiteren Kondensator (32) elektrisch miteinander verbunden sind, wobei das Zwischenpotenzial (31) des weiteren Brückenmoduls (4) einen Phasenanschluss (11) des Spannungszwischenkreis-Stromrichters (1) darstellt, **dadurch gekennzeichnet, dass**
die elektrische Verbindung (5) zwischen den Teilstromrichtern (2) eine höhere Induktivität aufweist als die Verbindungen zwischen Kondensator (22) oder weiterem Kondensator (32) und Leistungshalbleitereinheit (33), wobei für die elektrische Verbindung zwischen den Teilstromrichtern (2) eine Kabelverbindung genutzt wird, wobei der Teilstromrichter (2) als tauschbare Einheit ausgebildet ist.

2. Spannungszwischenkreis-Stromrichter (1) nach Anspruch 1, wobei für die Verbindung zwischen dem Teilstromrichter (2) und dem weiteren Brückenmodul (4) eine Kabelverbindung genutzt wird.

3. Spannungszwischenkreis-Stromrichter (1) nach einem der Ansprüche 1 oder 2, wobei die Teilstromrichter (2) räumlich voneinander getrennt angeordnet sind.

4. Spannungszwischenkreis-Stromrichter (1) nach einem der Ansprüche 1 bis 3, wobei die Teilstromrichter (2) in unterschiedlichen Schaltschränken angeordnet sind.

5. Spannungszwischenkreis-Stromrichter (1) nach einem der Ansprüche 1 bis 4, wobei die Leistungshalbleitereinheit (33) einen abschaltbaren Leistungshalbleiterschalter (34) mit einer dazu antiparallel angeordneten Diode (35) aufweist.

6. Spannungszwischenkreis-Stromrichter (1) nach einem der Ansprüche 1 bis 5, wobei die Leistungshalbleitereinheit (33) eine Reihenschaltung mehrerer Leistungshalbleiter aufweist.

7. Spannungszwischenkreis-Stromrichter (1) nach einem der Ansprüche 1 bis 6, wobei die Leistungshalbleitereinheit (33) abschaltbare Leistungshalbleiter vom Typ IGBT und/oder IGCT aufweist.

8. Spannungszwischenkreis-Stromrichter (1) nach einem der Ansprüche 1 bis 7, wobei die Leistungshalbleitereinheit (33) einen rückwärts leitfähigen, abschaltbaren Leistungshalbleiter aufweist.

9. Spannungszwischenkreis-Stromrichter (1) nach einem der Ansprüche 1 bis 8, wobei das weitere Brückenmodule (4) als tauschbare Einheit ausgebildet ist.

## Claims

1. Intermediate voltage circuit current converter (1) having two current converter sections (2) arranged in series on the direct voltage side,
wherein the current converter section (2) comprises a parallel connection of a capacitor (22) with a series connection comprising two bridge modules (3), wherein the connection between the two bridge modules (3) arranged in the series connection represents an output (21) of the current converter section (2),
wherein the outputs (21) of the two current converter sections (2) are connected to one another by means of a further bridge module (4), wherein the bridge modules (3,4) each have a series connection of two power semiconductor units (33), wherein the connection between the two power semiconductor units (33) represents the intermediate potentials (31) of the bridge modules (3, 4), wherein the intermediate potentials (31) of the current converter section (2) are electrically connected to one another by way of a further capacitor (32), wherein the intermediate potential (31) of the further bridge module (4) represents a phase connection (11) of the intermediate voltage circuit current converter (1), **characterised in that** the electrical connection (5) between the current converter sections (2) has a higher inductance than the connections between the capacitor (22) or the further capacitor (32) and the power semiconductor unit (33), wherein a cable connection is used for the electrical connection between the current converter sections (2), wherein the current converter section (2) is embodied as a replaceable unit.

2. Intermediate voltage circuit current converter (1) according to claim 1, wherein a cable connection is used for the connection between the current converter section (2) and the further bridge module (4).

3. Intermediate voltage circuit current converter (1) according to one of claims 1 or 2, wherein the current converter sections (2) are arranged spatially separate from one another.

4. Intermediate voltage circuit current converter (1) according to one of claims 1 to 3, wherein the current converter sections (2) are arranged in different switching cabinets.

5. Intermediate voltage circuit current converter (1) according to one of claims 1 to 4, wherein the power semiconductor unit (33) has a disconnectable power semiconductor switch (34) with a diode (35) arranged antiparallel thereto.

6. Intermediate voltage circuit current converter (1) according to one of claims 1 to 5, wherein the power semiconductor unit (33) has a series connection of a number of power semiconductors.

7. Intermediate voltage circuit current converter (1) according to one of claims 1 to 6, wherein the power semiconductor unit (33) has disconnectable power semiconductors of the IGBT and/or IGCT type.

8. Intermediate voltage circuit current converter (1) according to one of claims 1 to 7, wherein the power semiconductor unit (33) has a reverse conductive, disconnectable power semiconductor.

9. Intermediate voltage circuit current converter (1) according to one of claims 1 to 8, wherein the further bridge module (4) is embodied as a replaceable unit.

## Revendications

1. Onduleur (1) à circuit intermédiaire de tension, comprenant deux onduleurs (2) partiels montés en série du côté de la tension continue, dans lequel le convertisseur partiel a un circuit parallèle d'un condensateur (2) et d'un circuit série composé de deux modules (3) de pont, dans lequel la liaison entre les deux modules (3) de pont montés dans le circuit série représente une sortie (21) de l'onduleur (2) partiel,
dans lequel les sorties (21) des deux onduleurs (2) partiels sont reliées l'une à l'autre au moyen d'un autre module (4) de pont, dans lequel les modules (3, 4) de pont ont chacun un circuit série de deux unités (3) à semi-conducteur de puissance, dans lequel la liaison entre les deux unités (33) à semi-conducteur de puissance représentent les potentiels (31) intermédiaires des modules (3, 4) de pont, dans lequel les potentiels (31) intermédiaires de l'onduleur (2) partiel snt reliés entre eux électriquement par un autre condensateur (32), dans lequel le potentiel (31) intermédiaires de l'autre module (4) de pont représente une borne (11) de phase de l'onduleur (1) à circuit intermédiaire de tension,
**caractérisé en ce que** la liaison (5) électrique entre les onduleurs (2) partiels a une inductance plus grande que la liaison entre le condensateur (22) ou l'autre condensateur (32) et l'unité (33) à semi-conducteur de puissance, dans lequel, pour la liaison électrique entre les onduleurs (2) partiels, est utilisée une liaison par câble, dans lequel l'onduleur (2) partiel est constitué sous la forme d'une unité remplaçable.

2. Onduleur (1) à circuit intermédiaire de tension suivant la revendication 1, dans lequel il est utilisé une liaison par câble pour la liaison entre l'onduleur (2) partiel et l'autre module (4) de pont.

3. Onduleur (1) à circuit intermédiaire de tension suivant l'une des revendications 1 ou 2, dans lequel les onduleurs (2) partiels sont disposés en étant séparés l'un de l'autre dans l'espace.

4. Onduleur (1) à circuit intermédiaire de tension suivant l'une des revendications 1 à 3, dans lequel les onduleurs (2) partiels sont disposés dans des armoires de commande différentes.

5. Onduleur (1) à circuit intermédiaire de tension suivant l'une des revendications 1 à 4, dans lequel l'unité (33) à semi-conducteur de puissance a un interrupteur (34) à semi-conducteur de puissance pouvant être ouvert avec une diode (35) qui y est montée tête-bêche.

6. Onduleur (1) à circuit intermédiaire de tension suivant l'une des revendications 1 à 5, dans lequel l'unité (33) à semi-conducteur de puissance a un circuit série composé de plusieurs semi-conducteurs de puissance.

7. Onduleur (1) à circuit intermédiaire de tension suivant l'une des revendications 1 à 6, dans lequel l'unité (33) à semi-conducteur de puissance a un semi-conducteur de puissance pouvant être bloqué du type IGBT et/ou IGCT.

8. Onduleur (1) à circuit intermédiaire de tension suivant l'une des revendications 1 à 7, dans lequel l'unité (35) à semi-conducteur de puissance a un semi-conducteur de puissance conducteur vers l'arrière pouvant être bloqué.

9. Onduleur (1) à circuit intermédiaire de tension suivant l'une des revendications 1 à 8, dans lequel l'autre module (4) de pont est constitué sous la forme d'une unité remplaçable.
